# EUROPÄISCHE PATENTSCHRIFT

(11) **EP 3 255 401 B1**
(45) Veröffentlichungstag und Bekanntmachung des Hinweises auf die Patenterteilung: **31.03.2021**
(21) Anmeldenummer: 17173611.9
(22) Anmeldetag: 31.05.2017
(51) Int. Cl.: G01L 9/00, G01L 19/00, G01L 19/06, G01L 19/14, G01L 23/10

(54) **PIEZOELEKTRISCHER DRUCKSENSOR ZUM MESSEN HOHER DRÜCKE**
PIEZOELECTRIC PRESSURE SENSOR FOR MEASURING HIGH PRESSURES
CAPTEUR DE PRESSION PIÉZOÉLECTRIQUE DESTINÉ À LA MESURE DE HAUTES PRESSIONS

(30) Priorität: 07.06.2016 AT 505192016
(43) Veröffentlichungstag der Anmeldung: 13.12.2017
(73) Patentinhaber: Piezocryst Advanced Sensorics GmbH, 8020 Graz (AT)
(72) Erfinder: BAUMGARTNER, Martin, 8522 GROSS ST. FLORIAN (AT); MICHELITSCH, Wolfgang, 8041 GRAZ (AT); HIRSCHLER, Michael, 8020 GRAZ (AT)
(74) Vertreter: Babeluk, Michael

(56) Entgegenhaltungen:
- EP-A1- 3 124 943
- EP-A1- 3 124 944
- US-A1- 2010 294 028

## Beschreibung

Die Erfindung betrifft einen piezoelektrischen Drucksensor, welcher geeignet ist hohe Drücke zu messen, mit einem in eine Messbohrung einsetzbaren Gehäuse und einem piezoelektrischen Messelement, das zwischen einer frontseitig am Gehäuse angeordneten Sensormembran und einer inneren Gehäuseschulter angeordnet ist, wobei das piezoelektrische Messelement aus einem einzigen Kristallelement besteht.

Piezoelektrische Drucksensoren, die beispielsweise zur Druckmessung in Brennräumen von Hochleistungs-Brennkraftmaschinen eingesetzt werden, sind hohen Temperatur- und Druckbelastungen ausgesetzt, wobei Druckspitzen im Bereich von bis zu 1000 bar auftreten können. Wichtig dabei ist es die Durchbruchsicherheit und Dichtheit der Drucksensoren zu verbessern.

Insbesondere soll gewährleistet sein, dass selbst bei einem Bruch des piezoelektrischen Messelementes, das bei herkömmlichen Drucksensoren meist aus einem Stapel von scheibenförmigen oder ringförmigen Kristallelementen (siehe z.B. DE 34 23 711 A1 oder DE 38 38 014 A1) oder aus mehreren stehenden, stabförmigen Kristallelementen (siehe z.B. AT 504 485 B1) besteht, keine Teile des Drucksensors in den Brennraum der Brennkraftmaschine gelangen und dort Schäden verursachen können.

In diesem Zusammenhang wird in der WO 2009/015941 A1 ein piezoelektrischer Drucksensor beschrieben, der eine Sensormembran mit einem zentralen Druckstempel aufweist, der an einem Druckstück befestigt ist. Zwischen dem Druckstück und einer inneren Gehäuseschulter sind mehrere stabförmige, piezoelektrische Kristallelemente zur Nutzung des transversalen Piezoeffektes vorgespannt angeordnet. Bei einem Bruch der piezoelektrischen Kristallelemente infolge von Überlastung kommt eine Dichtschulter des Druckstücks zur Anlage an einem Dichtsitz im Inneren des Sensorgehäuses um den Austritt heißer Gase durch den Drucksensor zu verhindern. Nachteilig sind der relativ komplizierte Aufbau des Drucksensors und dessen große Bauhöhe

Aus der CH 705 469 A1 ist in diesem Zusammenhang ein Drucksensor mit Überlastschutz bekannt geworden. Der auf ein in einer Rohrfeder angeordnetes piezoelektrisches Messelement wirkende Druckstempel einer Sensormembran ist von einem ringförmigen, elastischen Membranbereich umgeben, wobei sich der Membranstempel bei axialer Druckeinwirkung in Richtung Membranstempel bewegen kann. Axial hinter dem elastischen Membranbereich, in Druckrichtung betrachtet hinter einem Spalt, ist ein fester Anschlag bzw. eine Schulter vorgesehen, wobei sich die Membran bei einer Überlast auf den Druckstempel am Anschlag abstützen kann. Bei einer Überlastung bewegt sich somit der Membranstempel in Richtung Messelement, wobei dieser Weg erst durch den Anschlag begrenzt wird.

Bei einem Bruch eines Kristallelements im Messelement - beispielsweise bei einer Druckmessung im Brennraum einer Brennkraftmaschine - können nach einigen paar Lastwechseln bzw. Arbeitsspielen alle im Messelement angeordneten Kristallelemente zerbrechen bzw. zerbröseln, sodass der zentrale Membranteil keine Wärmeenergie abführen kann. Dadurch überhitzt auch der dünne, elastische Teil der Sensormembran, wird weich und kann nach weiteren Arbeitsspielen Löcher und Risse bekommen, so dass der Drucksensor auch von innen mit Verbrennungsdruck beaufschlagt wird. Dadurch kann sich der elastische Membranbereich bei abfallendem Brennraumdruck aus dem Sensor (Drosselwirkung) biegen, hin und her gebogen werden, abbrechen und in den Brennraum gelangen.

Aus der EP 3 124 943 A1 und der im Hinblick auf die gegenständliche Erfindung im Wesentlichen inhaltsgleichen EP 3 124 944 A1 ist ein piezoelektrischer Drucksensor mit einem in eine Messbohrung einsetzbaren Gehäuse und einem darin angeordneten, piezoelektrischen Aufnehmer bekannt, der aus einem piezoelektrischen Aufnahmeelement (piezoelektrisches Kristallelement) und beidseitig angeordneten Auflageelementen besteht, wobei diese Elemente unter Ausbildung eines Ringspalts in einer Vorspannhülse angeordnet sind, die sich über ein Zwischenelement frontseitig am Druckstempel einer Sensormembran abstützt. Nachteilig ist die komplexe, wenig kompakte Bauweise. Weiters besteht bei einem Bruch des piezoelektrischen Kristallelements die Gefahr, dass dessen Teile nicht in Position gehalten werden und in den Ringspalt zwischen Kristallelement und Vorspannhülse austreten.

Aus der US 2010/294028 A1 ist ein Drucksensor mit einer frontseitigen Sensormembran bekannt, die über einen im Gehäuse des Sensors angeordneten Isolierkörper auf ein Wandlerelement in Form eines Piezo-Quarzes wirkt. Der im Querschnitt quadratische Piezo-Quarz ist in einem Sensorhalter angeordnet, wobei das Ausmaß der Berührung des Piezo-Quarzes durch den Sensorhalter dadurch minimiert wird, dass lediglich acht kleine Rippen im Inneren einer Durchgangsöffnung des Sensorhalters vorgesehen sind, sodass für den Fall, dass eine Berührung des Piezo-Quarzes unvermeidbar ist, diese nur minimal und nicht großflächig ausfällt. Damit können bei einem Bruch des piezoelektrischen Kristallelements dessen Teile - insbesondere in den Bereichen zwischen den Rippen - nicht in Position gehalten werden, zumal der Sensorhalter zusätzlich große seitliche Aussparungen für die elektrische Kontaktierung des Piezo-Quarzes aufweist.

Aufgabe der Erfindung ist es, die genannten Nachteile zu vermeiden und einen Drucksensor vorzuschlagen der für den Messeinsatz bei hohen Temperaturen und Drücken mit Druckspitzen im Bereich von bis zu 1000 bar geeignet ist. Weiters soll der Drucksensor konstruktiv einfach, kompakt und robust aufgebaut sein. Bei einem Messelementbruch soll der zentrale Teil der Sensormembran nicht in den Drucksensor eingedrückt werden.

Erfindungsgemäß wird dies dadurch erreicht, dass das Kristallelement mit seiner Basisfläche und seiner gegenüberliegenden Deckfläche zwischen einem Druckstempel der Sensormembran und einer sich an der Gehäuseschulter abstützenden Ableitelektrode eingespannt ist, sowie dass eine die Basisfläche mit der Deckfläche verbindende Mantelfläche des Kristallelements großteils an einer im Gehäuse angeordneten, elektrisch isolierenden Positionierhülse anliegt. Selbst bei einem Bruch des einzigen Kristallelements werden dessen Teile in Position gehalten, sodass der Membranstempel weiterhin abgestützt wird und die mechanischen und thermischen Eigenschaften des Sensors im Wesentlichen beibehalten werden können.

Bevorzugt stützt sich dabei die elektrisch isolierende Positionierhülse in radialer Richtung an einer Innenwand des Gehäuses des Drucksensors ab. Gemäß einer ersten Ausführungsvariante der Erfindung ist das Kristallelement quaderförmig oder stabförmig ausgebildet . Bei dieser Variante wird der transversale Piezoeffekt genutzt, wobei die Krafteinleitung normal zur elektrischen Achse des piezoelektrischen Kristallelements erfolgt.

Gemäß einer zweiten Ausführungsvariante der Erfindung ist das Kristallelement scheibchenförmig ausgebildet. Bei dieser Variante wird der longitudinale Piezoeffekt genutzt, wobei die Krafteinleitung parallel zur elektrischen Achse des piezoelektrischen Kristallelements erfolgt.

Insbesondere bei der Ausgestaltung des Kristallelements als flache, kreisrunde Scheibe mit oder ohne zentraler Öffnung ergeben sich folgende Vorteile:
- Sehr robuster Aufbau - auch bei einem Bruch der Kristallscheibe ändert sich das Sensorverhalten (Empfindlichkeit) durch Ausnutzung des Longitudinaleffektes nur unwesentlich.
- Durch die umliegende Positionierhülse, beispielsweise aus einem geeigneten Kunststoffmaterial, werden die Bruchstücke (nach einer möglichen Überlast) in Position gehalten und unterstützen auch dann noch den zentralen Bereich der Sensormembran. D.h. Der Verformungsgrad der Membran sowie die thermische Anbindung der Membran bleiben im Wesentlichen unverändert.
- Durch die Verwendung nur eines Kristallelemente kann ein Innengehäuse (Double Shell Einsatz) mit geringer Bauhöhe ausgeführt sein, d.h. der Temperaturgradient innerhalb des Messelements kann gering gehalten werden. Daraus resultieren geringere innere Spannungen und eine erhöhte Sensorrobustheit.

Erfindungsgemäß kann das Gehäuse aus einem Außengehäuse und einem darin angeordneten, topfförmigen Innengehäuse bestehen, wobei das Kristallelement zwischen der frontseitig am Innengehäuse angeordneten Sensormembran und einer Gehäuseschulter des Innengehäuses angeordnet ist.

Bevorzugt kann das Kristallelement aus Langasit (z.B. La₃Ga₅SiO₁₄), Langatat (z.B. La₃Ga_{5,5}Ta_{0,5}O₁₄), Lithiumniobat oder aus Galliumorthophosphat bestehen.

Die Erfindung wird im Folgenden an Hand von Ausführungsbeispielen näher erläutert. Es zeigen:
- Fig. 1: eine erste Ausführungsvariante eines erfindungsgemäßen Drucksensor in einer teilweisen Schnittdarstellung;
- Fig. 2: ein Detail A des Drucksensors aus Fig. 1 in einer vergrößerten Schnittdarstellung;
- Fig. 3: eine Schnittdarstellung des Drucksensors nach Linie III-III in Fig. 1; sowie
- Fig. 4: eine zweite Ausführungsvariante des erfindungsgemäßen Drucksensor in einer Schnittdarstellung gemäß Fig. 2.

Funktionsgleiche Teile sind in den Ausführungsvarianten mit gleichen Bezugszeichen versehen.

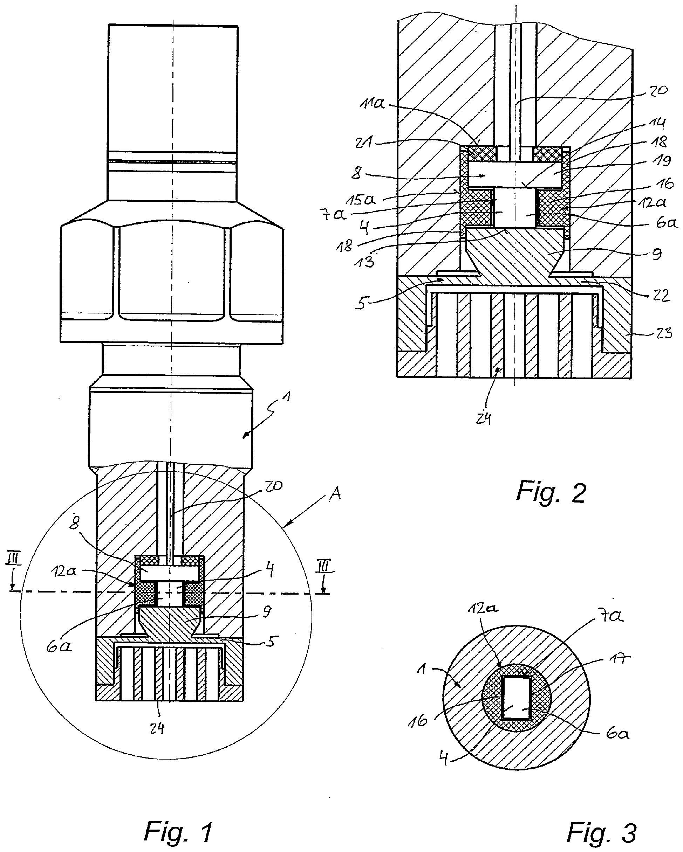

Der in den Fig. 1 bis Fig. 3 dargestellte piezoelektrische Drucksensor weist ein in eine Messbohrung einsetzbares Gehäuse 1 auf, das in seinem Inneren ein piezoelektrisches Messelement 4 aufnimmt, das zwischen einer frontseitig bzw. druckseitig am Gehäuse 1 angeordneten Sensormembran 5 und einer inneren Gehäuseschulter 11a angeordnet ist. Die Sensormembran 5 besteht im Wesentlichen aus dem zentralen Druckstempel 9 der von einem elastischen Membranbereich 22 umgeben ist und außen mit einem topfförmigen Flanschbereich 23 abschließt, der mit dem Gehäuse 1 verschweißt ist und ein Thermoschutzelement 24 aufnehmen kann.

Bei der Erfindung besteht das piezoelektrische Messelement 4 aus einem einzigen Kristallelement 6a, das mit seiner Basisfläche 13 und seiner gegenüberliegenden Deckfläche 14 zwischen dem Druckstempel 9 der Sensormembran 5 und einer sich an der Gehäuseschulter 11a abstützenden Ableitelektrode 8 eingespannt ist. Die seitlichen Begrenzungsflächen, d.h. eine die Basisfläche 13 mit der Deckfläche 14 verbindende Mantelfläche 7a des Kristallelements 6a liegt großteils (im dargestellten Beispiel im Wesentlichen vollflächig) an einer im Gehäuse 1 angeordneten Positionierhülse 12a an. Die Positionierhülse 12a stützt sich in radialer Richtung an einer Innenwand 15a des Gehäuses 1 des Drucksensors ab.

Selbst bei einem möglichen Bruch des Kristallelements - ausgelöst durch hohe Druckspitzen - können die Bruchstücke des Kristallelements in Position gehalten werden, sodass ein Verformen und Einreißen des dünnen Membranbereichs 22 der Sensormembran 5 verhindert werden kann.

Bei der in den Fig. 1 bis Fig. 3 dargestellten Ausführungsvariante ist das Kristallelement 6a unter Verwendung des transversalen Piezoeffektes quaderförmig oder stabförmig ausgebildet, wobei die größte Längserstreckung des Kristallelements 6a bevorzugt normal zur zentralen Achse des Drucksensors ausgerichtet ist. Die aus den Längs- und Querflächen zusammengesetzte Mantelfläche 7a des Kristallelements 6a liegt an der elektrisch isolierenden Positionierhülse 12a im Wesentlichen vollflächig an.

Die Positionierhülse 12a weist einen zentralen Bereich 16 mit einer vorzugsweise rechteckförmigen oder quadratischen Ausnehmung 17 für das Kristallelement 6a auf, an welchen zumindest an einer Seite ein kreisringförmiger Bereich 18 zur zumindest teilweisen Aufnahme der Ableitelektrode 8 und/oder des Druckstempels 9 anschließt. Eine geringfügige axiale Freistellung zwischen dem zentralen Bereich 16 der Positionierhülse 12a und dem Druckstempel 9 bzw. der Ableitelektrode 8 gewährleistet eine ungestörte Krafteinleitung in das piezoelektrische Kristallelement 6a.

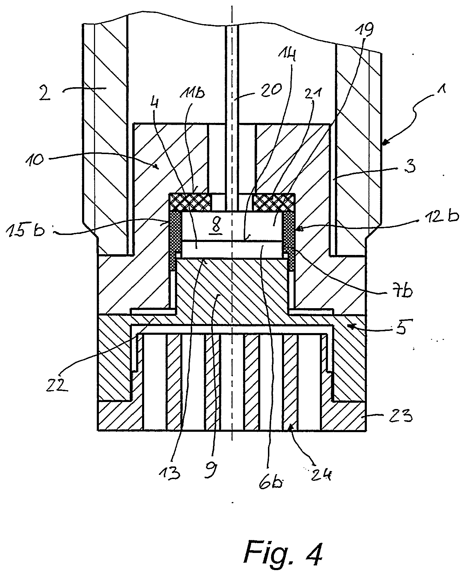

Fig. 4 zeigt einen Drucksensor mit einem Außengehäuse 2, welches unter Bildung eines Ringspaltes 3 ein topfförmiges Innengehäuse10 aufnimmt, wobei zwischen der druckseitig am Innengehäuse 10 angeordneten Sensormembran 5 und einer Innentopfbasis bzw. inneren Gehäuseschulter 11b des Innengehäuses 10 ein piezoelektrisches Messelement 4 gegen die Innentopfbasis vorgespannt ist. Das piezoelektrische Messelement 4 besteht aus einem einzigen Kristallelement 6b, das im dargestellten Ausführungsbeispiel scheibchenförmig ausgebildet ist und mit seiner zylindrischen bzw. kreiszylindrischen Mantelfläche 7b zumindest großteils an der elektrisch isolierenden Positionierhülse 12b anliegt.

Bevorzugt verhält sich der Durchmesser zur Dicke des flachen, scheibchenförmigen Kristallelements 6b wie 15:1 bis 5:1, vorzugsweise wie 12:1 bis 8:1.

Wie in den Fig. 2 und Fig. 4 dargestellt, kann die Ableitelektrode 8 aus einem an der Positionierhülse 12a, 12b anliegenden, scheibenförmigen Grundkörper 19 mit einer zentralen Signalableitung 20 bestehen, wobei sich der scheibenförmige Grundkörper 19 unter Zwischenlage eines bevorzugt kreisringförmigen Isolierelementes 21 an der Gehäuseschulter 11a des Gehäuses 1 (Fig. 2) oder der Innentopfbasis bzw. Gehäuseschulter 11b des Innengehäuses 10 (Fig. 4) abstützt.

## Patentansprüche

1. Piezoelektrischer Drucksensor, welcher geeignet ist hohe Drücke zu messen, mit einem in eine Messbohrung einsetzbaren Gehäuse (1) und einem piezoelektrischen Messelement (4), das zwischen einer frontseitig am Gehäuse (1) angeordneten Sensormembran (5) und einer inneren Gehäuseschulter (11a; 11b) angeordnet ist, wobei das piezoelektrische Messelement (4) aus einem einzigen Kristallelement (6a; 6b) besteht, **dadurch gekennzeichnet, dass** das Kristallelement (6a; 6b) mit seiner Basisfläche (13) und seiner gegenüberliegenden Deckfläche (14) zwischen einem Druckstempel (9) der Sensormembran (5) und einer sich an der Gehäuseschulter (11a; 11b) abstützenden Ableitelektrode (8) eingespannt ist, sowie dass eine die Basisfläche (13) mit der Deckfläche (14) verbindende Mantelfläche (7a; 7b) des Kristallelements (6a; 6b) großteils an einer im Gehäuse (1) angeordneten, elektrisch isolierenden Positionierhülse (12a; 12b) anliegt.

2. Piezoelektrischer Drucksensor nach Anspruch 1, **dadurch gekennzeichnet, dass** sich die elektrisch isolierende Positionierhülse (12a; 12b) in radialer Richtung an einer Innenwand (15a; 15b) des Gehäuses (1) abstützt.

3. Piezoelektrischer Drucksensor nach Anspruch 1 oder 2, **dadurch gekennzeichnet, dass** das Kristallelement (6a) quaderförmig oder stabförmig ausgebildet ist.

4. Piezoelektrischer Drucksensor nach Anspruch 3, **dadurch gekennzeichnet, dass** die Positionierhülse (12a) einen zentralen Bereich (16) mit einer rechteckförmigen oder quadratischen Ausnehmung (17) für das Kristallelement (6a) aufweist, an welchen zumindest an einer Seite ein kreisringförmiger Bereich (18) zur Aufnahme der Ableitelektrode (8) und/oder des Druckstempels (9) anschließt.

5. Piezoelektrischer Drucksensor nach Anspruch 1 oder 2, **dadurch gekennzeichnet, dass** das Kristallelement (6b) scheibchenförmig ausgebildet ist .

6. Piezoelektrischer Drucksensor nach Anspruch 5, **dadurch gekennzeichnet, dass** sich der Durchmesser zur Dicke des scheibchenförmigen Kristallelements (6b) wie 15:1 bis 5:1 verhält.

7. Piezoelektrischer Drucksensor nach Anspruch 6, **dadurch gekennzeichnet, dass** sich der Durchmesser zur Dicke des scheibchenförmigen Kristallelements (6b) wie 12:1 bis 8:1 verhält.

8. Piezoelektrischer Drucksensor nach einem der Ansprüche 1 bis 7, **dadurch gekennzeichnet, dass** das Gehäuse (1) aus einem Außengehäuse (2) und einem darin angeordneten, topfförmigen Innengehäuse (10) besteht, wobei das Kristallelement (6a; 6b) zwischen der frontseitig am Innengehäuse (10) angeordneten Sensormembran (5) und einer Gehäuseschulter (11b) des Innengehäuses (10) angeordnet ist.

9. Piezoelektrischer Drucksensor nach Anspruch 8, **dadurch gekennzeichnet, dass** das Innengehäuse (10) einen Ringspalt (3) zum Außengehäuse (2) aufweist.

10. Piezoelektrischer Drucksensor nach einem der Ansprüche 1 bis 9, **dadurch gekennzeichnet, dass** die Ableitelektrode (8) einen an der Positionierhülse (12a; 12b) anliegenden, scheibenförmigen Grundkörper (19) mit einer zentralen Signalableitung (20) aufweist, wobei sich der scheibenförmige Grundkörper (19) unter Zwischenlage eines Isolierelementes (21) an der Gehäuseschulter (11a; 11b) abstützt.

11. Piezoelektrischer Drucksensor nach Anspruch 10, **dadurch gekennzeichnet, dass** das Isolierelement (21) kreisringförmig ausgebildet ist

12. Piezoelektrischer Drucksensor nach einem der Ansprüche 1 bis 11, **dadurch gekennzeichnet, dass** das Kristallelement (6a; 6b) aus Langasit, Langatat, Lithiumniobat oder aus Galliumorthophosphat besteht.

## Claims

1. Piezoelectric pressure sensor which is suitable for measuring high pressures, having a housing (1) which can be inserted into a measuring bore and a piezoelectric measuring element (4) which is arranged between a sensor diaphragm (5) arranged on the front side of the housing (1) and an inner housing shoulder (11a; 11b), wherein the piezoelectric measuring element (4) consists of a single crystal element (6a; 6b), **characterised in that** the crystal element (6a; 6b) is clamped with its base surface (13) and its opposite cover surface (14) between a pressure plunger (9) of the sensor diaphragm (5) and a dissipating electrode (8) supported on the housing shoulder (11a; 11b), and **in that** a lateral surface (7a; 7b) of the crystal element (6a; 6b) connecting the base surface (13) to the cover surface (14) largely rests against an electrically insulating positioning sleeve (12a; 12b) arranged in the housing (1).

2. Piezoelectric pressure sensor according to claim 1, **characterised in that** the electrically insulating positioning sleeve (12a; 12b) is supported in the radial direction on an inner wall (15a; 15b) of the housing (1).

3. Piezoelectric pressure sensor according to claim 1 or 2, **characterised in that** the crystal element (6a) is of cuboidal or rod-shaped design.

4. Piezoelectric pressure sensor according to claim 3, **characterised in that** the positioning sleeve (12a) has a central region (16) with a rectangular or square recess (17) for the crystal element (6a), which is adjoined at least on one side by an annular region (18) for accommodating the dissipating electrode (8) and/or the pressure plunger (9).

5. Piezoelectric pressure sensor according to claim 1 or 2, **characterised in that** the crystal element (6b) is of disc-shaped design.

6. Piezoelectric pressure sensor according to claim 5, **characterised in that** the diameter to the thickness of the disc-shaped crystal element (6b) is such as 15:1 to 5:1.

7. Piezoelectric pressure sensor according to claim 6, **characterised in that** the diameter to the thickness of the disc-shaped crystal element (6b) is such as 12:1 to 8:1.

8. Piezoelectric pressure sensor according to one of claims 1 to 7, **characterised in that** the housing (1) consists of an outer housing (2) and a pot-shaped inner housing (10) arranged therein, wherein the crystal element (6a; 6b) is arranged between the sensor diaphragm (5) arranged on the front side of the inner housing (10) and a housing shoulder (11b) of the inner housing (10).

9. Piezoelectric pressure sensor according to claim 8, **characterised in that** the inner housing (10) has an annular gap (3) to the outer housing (2).

10. Piezoelectric pressure sensor according to one of claims 1 to 9, **characterised in that** the dissipating electrode (8) has a disc-shaped main body (19) which rests against the positioning sleeve (12a; 12b) and has a central signal output conduction (20), wherein the disc-shaped main body (19) is supported on the housing shoulder (11a; 11b) with the interposition of an insulating element (21).

11. Piezoelectric pressure sensor according to claim 10, **characterised in that** the insulating element (21) is formed in the shape of a circular ring.

12. Piezoelectric pressure sensor according to one of claims 1 to 11, **characterised in that** the crystal element (6a; 6b) consists of langasite, langatate, lithium niobate or of gallium orthophosphate.

## Revendications

1. Capteur de pression piézoélectrique destiné à mesurer des hautes pressions comprenant un boîtier (1) se logeant dans un perçage de mesure ainsi qu'un élément de mesure piézoélectrique (4) placé entre une membrane de capteur (5) installée côté frontal du boîtier (1) et un épaulement intérieur de boîtier (11a, 11b),
l'élément de mesure piézoélectrique (4) étant composé d'un unique élément de cristal (6a, 6b),
capteur de pression **caractérisé en ce que**
l'élément de cristal (6a, 6b) est serré par sa surface de base (13) et sa surface de dessus (14) opposée, entre un poinçon (9) de la membrane de capteur (5) et une électrode de sortie (8) s'appuyant contre l'épaulement de boîtier (11a, 11b), et
une surface enveloppe (7a, 7b) de l'élément de cristal (6a, 6b) reliant la surface de base (13) à la surface supérieure (14) s'applique en grande partie contre un manchon de positionnement (12a, 12b) électro-isolant prévu dans le boîtier (1).

2. Capteur de pression piézoélectrique selon la revendication 1,
**caractérisé en ce que**
le manchon de positionnement électro-isolant (12a, 12b) s'appuie dans la direction radiale contre la paroi intérieure (15a, 15b) du boîtier (1).

3. Capteur de pression piézoélectrique selon la revendication 1 ou 2,
**caractérisé en ce que**
l'élément de cristal (6a) a une forme de parallélépipède ou de tige.

4. Capteur de pression piézoélectrique selon la revendication 3,
**caractérisé en ce que**
le manchon de positionnement (12a) a une zone centrale (16) avec un évidement (17) de forme rectangulaire ou carrée pour l'élément de cristal (6a), suivi sur au moins un côté, d'une zone (18) en forme d'anneau de cercle pour recevoir l'électrode de sortie (8) et/ou le poinçon (9).

5. Capteur de pression piézoélectrique selon la revendication 1 ou 2,
**caractérisé en ce que**
l'élément de cristal (6b) est en forme de disque.

6. Capteur de pression piézoélectrique selon la revendication 5,
**caractérisé en ce que**
le diamètre par rapport à l'épaisseur de l'élément de cristal (6b) en forme de disque est de 15:1 jusqu'à 5:1.

7. Capteur de pression piézoélectrique selon la revendication 6,
**caractérisé en ce que**
le diamètre par rapport à l'épaisseur, de l'élément de cristal en forme de disque (6b) correspond à un rapport de 12:1 jusqu'à 8:1.

8. Capteur de pression piézoélectrique selon l'une des revendications 1 à 7,
**caractérisé en ce que**
le boîtier (1) se compose d'un boîtier extérieur (2) et d'un boîtier intérieur (10) en forme de pot, logé dans celui-ci, l'élément de cristal (6a, 6b) étant prévu entre la membrane de capteur (5) sur le côté frontal du boîtier intérieur (10) et un épaulement (11b) du boîtier intérieur (10).

9. Capteur de pression piézoélectrique selon la revendication 8,
**caractérisé en ce que**
vers le boîtier extérieur (2) le boîtier intérieur (10) comporte un intervalle annulaire (3).

10. Capteur de pression piézoélectrique selon l'une des revendications 1 à 9,
**caractérisé en ce que**
l'électrode de sortie (8) a un corps de base (19) en forme de disque s'appliquant contre le manchon de positionnement (12a, 12b) et ayant une sortie centrale de signal (20), le corps de base (19) en forme de disque s'appuyant contre l'épaulement de boîtier (11a, 11b) avec interposition d'un élément isolant (21).

11. Capteur de pression piézoélectrique selon la revendication 10,
**caractérisé en ce que**
l'élément isolant (21) est en forme d'anneau de cercle.

12. Capteur de pression piézoélectrique selon l'une des revendications 1 à 11,
**caractérisé en ce que**
l'élément de cristal (6a, 6b) est la langasite, le langatate, le niobiat de lithium ou l'orthophosphate de gallium.
